# EUROPÄISCHE PATENTSCHRIFT

(11) **EP 0 465 820 B1**
(45) Veröffentlichungstag und Bekanntmachung des Hinweises auf die Patenterteilung: **19.01.1994**
(21) Anmeldenummer: 91108975.3
(22) Anmeldetag: 01.06.1991
(51) Int. Cl.: B60T 8/40

(54) **Steuerstufe für die Ansteuerung des Antriebsmotors der Rückförderpump-Einheit eines Antiblockier-Systems (ABS)**
Control stage for driving the motor of a pump unit in a pump-back antilock brake system
Etage de commande pour le contrôle d'un moteur d'entraînement d'une pompe de refoulement d'un système antiblocage

(30) Priorität: 13.07.1990 DE 4022407
(43) Veröffentlichungstag der Anmeldung: 15.01.1992
(73) Patentinhaber: MERCEDES-BENZ AG, 70327 Stuttgart (DE)
(72) Erfinder: Müller, Armin, W-7150 Backnang (DE); Zimmer, Richard, W-7012 Fellbach (DE); Faulhaber, Andreas, W-7056 Weinstadt (DE)

(56) Entgegenhaltungen:
- EP-A- 0 313 292
- DE-A- 3 404 135
- DE-A- 3 813 172
- DE-A- 3 813 174
- GB-A- 2 197 402
- GB-A- 2 219 056

## Beschreibung

Die Erfindung betrifft eine Steuerstufe für die Antriebssteuerung des Antriebsmotors der Rückförderpump-Einheit eines Antiblockier-Systems (ABS) gemäß dem Oberbegriff des Patentanspruchs 1.

Das ABS, das bei der Mehrzahl von der Anmelderin hergestellter Personenkraftwagen serienmäßig eingesetzt wird, arbeitet nach dem Rückförderprinzip, gemäß welchem Bremsflüssigkeit, die während einer Druckabbauphase aus einer der Regelung unterworfenen Radbremse abgelassen wird, über ein Bremsdruck-Regelventil, das durch ein Druckabbausignal der elektronischen ABS-Steuereinheit in seine Druckabbau-Stellung gesteuert ist und über eine Rücklaufleitung des Bremskreises, zu dem die der Regelung unterworfene Radbremse gehört, in einen Niederdruck-Speicher gelangt, aus dem dann die abgelassene Bremsflüssigkeit mittels der dem betrachteten Bremskreis zugeordneten Rückförderpumpe in die Hauptbremsleitung des Bremskreises zurückgepumpt wird, wodurch aus der Hauptbremsleitung auch Bremsflüssigkeit in den dem Bremskreis zugeordneten Ausgangsdruckraum des Bremsgeräts, in der Regel eines Tandem-Hauptzylinders, zurückgefördert wird. Dadurch wird das Bremspedal in Richtung auf seine Grundstellung zurückgeschoben, was der Fahrer als Rückmeldung über die Aktivierung des ABS spürt. Die den beiden Bremskreisen - einem Vorderachs-Bremskreis und einem Hinterachs-Bremskreis - je einzeln zugeordneten, üblicherweise als Freikolbenpumpen ausgebildeten Rückförderpumpen haben einen gemeinsamen Exzenter-Antrieb, der mittels eines Elektromotors angetrieben wird. Bei dem serienmäßigen ABS wird dieser Antriebsmotor ab Beginn einer einen Antiblockier-Regelzyklus einleitenden Druckabsenkungsphase mit voller Leistung, d.h. mit seiner vollen Betriebsspannung und maximaler Drehzahl angetrieben, so daß ab Beginn der Druckabsenkungsphase die Rückförderpumpen auch mit ihrer maximalen Förderleistung betrieben werden.

Dies hat zur Folge, daß, wenn das ABS anspricht, auch dann, wenn dem Betrage nach nur relativ geringfügige Bremsdruck-Absenkungen an den der Regelung unterworfenen Fahrzeugrädern erforderlich sind, eine unverhältnismäßig kräftige, stoßartige Rückwirkung auf das Bremspedal auftritt, was von Komfort-gewohnten Fahrern zumindest als lästig, oftmals auch als erschreckend empfunden wird.

Dieser Nachteil kann vermieden werden, wenn das ABS so gestaltet wird, daß es im Bereich niedriger Beträge erforderlicher Druckabsenkungen nach dem Prinzip der Druckmodulation durch Erweiterung einer Modulationskammer und erst im Bereich höherer Beträge der erforderlichen Druckabsenkungen nach einem modifizierten Rückförderprinzip arbeitet, bei dem der Druckmodulator auch die Funktion einer Rückförderpumpe übernimmt, so daß eine am Bremspedal spürbare Rückmeldung über die Aktivierung des ABS nur in sehr viel selteneren Fällen und auch weniger "heftig" erfolgt, jedoch ist eine derartige Realisierung eines ABS mit einem erheblichen konstruktiven Aufwand hinsichtlich der Gestaltung der Hydraulikeinheit verbunden und sehr viel teurer als die Hydraulikeinheit des konventionellen ABS.

Ein weiteres Antiblockiersystem, bei dem das Problem der Pedalreaktion bei einem Ansprechen der Regelung weniger gravierend ist als bei einem nach dem Rückförderprinzip arbeitenden Antiblockiersystem ist das durch die DE 37 31 603 A1 Bekannte, das nach dem Prinzip der Bremsdruck-Absenkung durch Ablassen von Bremsflüssigkeit aus dem/den Radbremszylinder(n) einer oder mehrerer der Regelung unterworfenen Radbremse(n) in den Vorratsbehälter arbeitet und Bremsdruck-Wiederaufbau-Phasen mittels mindestens einer elektrisch angetriebenen Pumpe steuert, mittels welcher Bremsflüssigkeit aus dem Vorratsbehälter in die Radbremse(n) gepumpt wird. Während einer Aktivierung der Regelung wird - ebenfalls mittels der Pumpe - eine solche Menge an Bremsflüssigkeit in den Hauptzylinder der Bremsanlage gepumpt, daß dessen Kolben und mit diesem/diesen das Bremspedal eine für die Regelung vorgesehene Soll-Position einnehmen, die einer Zwischenstellung zwischen deren möglichen Extremalpositionen entspricht. Diese Einstellung der Soll-Position ist erforderlich, um unter extremen Regelungsbedingungen ein "Leer-Regeln" des Hauptzylinders auszuschließen, mit dem nach Abschluß eines solchen Regelungsvorganges ein Ausfall der Bremsanlage verknüpft wäre. Um während des Einstellens der für die Regelung vorgesehenen Soll-Position der Hauptzylinderkolben und des Bremspedals ein möglichst angenehmes Pedalgefühl zu gewährleisten und den Bedienungskomfort nicht zu beeinträchtigen, kann weiter, wie durch die DE 38 18 260 A1 bekannt, die Drehzahl der Pumpe nach einem "Volumenmodell" bedarfsgerecht gesteuert werden, derart, daß die Pumpe mit hoher Drehzahl einsetzt, wenn bis zur Erreichung der Soll-Position des Bremspedals eine größere Bremsflüssigkeits-Menge in den Hauptzylinder gepumpt werden muß, und mit geringerer Drehzahl, wenn Ist- und Soll-Position des Bremspedals nur geringfügig verschieden sind.

Ein gewichtiger Nachteil eines solchen im Regelungsbetrieb mit einem Öffnen der Bremskreise zum Vorratsbehälter hin arbeitenden Antiblockiersystems ist jedoch, wie in Kombination mit einem solchen durch die DE 38 13 172 A1 weiter bekannt, der erhebliche technische Aufwand, der für die aus Sicherheitsgründen erforderliche Funktions-Überwachung der Pumpe getrieben werden muß. Zwar können hierfür auch für die Steuerung der Pumpendrehzahl ausgenutzte Sensoren, wie Raddrehzahl-Sensoren, Kolben-Positions-Sensoren und/oder Druck-Sensoren mit herangezogen werden, jedoch müssen bei einem solchen Antiblockiersystem auch mindestens die den einer Regelung unterwerfbaren Radbremsen zugeordneten Auslaßventile hinsichtlich ihrer Funktionsfähigkeit überprüfbar sein, was zusätzlichen Aufwand bedingt, um eine der Funktionssicherheit einer mit einem nach dem Rückförderprinzip, d.h. ständig mit geschlossenen Bremskreisen arbeitenden Antiblockiersystem ausgerüsteten Bremsanlage vergleichbare Funktionssicherheit insgesamt zu erreichen.

Aufgabe der Erfindung ist es daher, das serienübliche oder ein diesem funktionell entsprechendes Antiblockiersystem mit geringem Aufwand dahingehend zu verbessern, daß die am Bremspedal spürbare, für ein Ansprechen des Antiblockiersystems charakteristische Rückmeldung bei gleichwohl hinreichender Spürbarkeit deutlich gemildert wird. Diese Aufgabe wird durch eine erfindungsgemäße Steuerstufe mit den kennzeichnenden Merkmalen des Patentanspruchs 1 gelöst.

Die hiernach vorgesehene Art der Ansteuerung des Antriebsmotors der Rückförderpumpen hat die Wirkung, daß in Fällen, in denen der Bremsdruck nur um einen relativ geringen Betrag gesenkt werden muß und demgemäß Druckabsenkungssignale relativ kurzer Dauer erzeugt werden, die Drehzahl des Antriebsmotors der Rückförderpumpe niedrig gehalten wird, mit der Folge, daß die Rückförderung der Bremsflüssigkeit in die Bremsleitung(en) entsprechend langsam erfolgt und demgemäß auch die Pedalrückwirkung sanft ist. Die Rückmeldebewegungen des Bremspedals verlaufen gleichsam "rampenförmig" geglättet und nicht abrupt stufenförmig, was ein wesentlich weniger störendes Pedalgefühl bei einem Ansprechen der Regelung ergibt. Die erfindungsgemäße Steuerstufe ist auch billig realisierbar, da lediglich zusätzliche elektronische Komponenten benötigt werden, die schaltungstechnisch ohne weiteres in die elektronische Steuereinheit des ABS integriert werden können. Die Steuerstufe trägt daher allenfalls unwesentlich zum Gesamtpreis des ABS bei, was durch den Komfortgewinn bei weitem gerechtfertigt erscheint. Durch die Bedingung, daß das zeitliche Integral der Betriebsspannung über deren Reduzierungsphase mindestens gleich dem zeitlichen Integral der Betriebsspannung des Rückförderpumpen-Antriebsmotors über deren Anstiegsphase sein soll, ist auch in einem ausreichenden Maße sichergestellt, daß der/die Pufferspeicher, welche in Druckabbauphasen der Antiblockier-Regelung Bremsflüssigkeit aufnehmen können, am Abschluß einer Druckabbauphase weitgehend leergepumpt und daher für erneut zuströmende Bremsflüssigkeit wieder aufnahmefähig ist/sind.

Durch die Merkmale des Anspruchs 2 ist dem grundsätzlichen Aufbau nach eine durch die Merkmale des Anspruchs 3 näher spezifizierte Realisierung der erfindungsgemäßen Steuerstufe mit digital-elektronischen Mitteln angegeben, die auf einfache Weise in die elektronische Steuereinheit des ABS integrierbar ist.

In Kombination hiermit ist durch die Merkmale der Ansprüche 4 bis 6 eine bevorzugte Gestaltung der Steuerstufe in Einzelheiten spezifiziert, die auf ein Fahrzeug mit Vorderachs-/Hinterachs-Bremskreisaufteilung und separater Bremsdruck-Regelung an den Vorderradbremsen und gemeinsamer Bremsdruck-Regelung an den Hinterradbremsen zugeschnitten ist.

Durch die Merkmale des Anspruchs 7 ist hinsichtlich ihres Grundprinzips eine Maßnahme angegeben, durch die zusätzliche Sicherheit dafür erreichbar ist, daß zur Aufnahme in Druckabbauphasen der Antiblockier-Regelung abgelassener Bremsflüssigkeit vorgesehene Niederdruckspeicher am Ende einer Druckabbauphase vollständig leergepumpt und damit für eine nachfolgende Druckabbauphase wieder mit ihrer vollen Kapazität aufnahmefähig sind.

Diese Maßnahme ist durch die Merkmale des Anspruchs 8 und in Kombination mit den vorgenannten digital-elektronischen Realisierungen der erfindungsgemäßen Steuerstufe gemäß den Merkmalen des Anspruchs 9 auf einfache Weise realisierbar.

Durch die Merkmale der Ansprüche 10 und 11 sind weitere, alternative Möglichkeiten angegeben, durch die sichergestellt werden kann, daß zur Aufnahme von Bremsflüssigkeit vorgesehene Pufferspeicher nach Ablauf von Druckabbauphasen wieder vollständig leergepumpt sind, wobei diese Möglichkeiten auch in Kombination mit den diesbezüglich vorgenannten ausgenutzt werden können.

Weitere Einzelheiten und Merkmale der Erfindung ergeben sich aus der nachfolgenden Beschreibung eines speziellen Ausführungsbeispiels, einschließlich möglicher Abwandlungen desselben, anhand der Zeichnung. Es zeigen:
- Fig. 1: ein elektro-hydraulisches Schaltbild eines nach dem Rückförderprinzip arbeitenden Antiblockier-Systems für ein Straßenfahrzeug, zur Erläuterung des Standes der Technik des der Erfindung zugrundeliegenden Problems und
- Fig. 2: ein Blockschaltbild einer erfindungsgemäßen elektronischen Steuerstufe zur Steuerung des Aufbaus und Abbaus der Versorgungsspannung des elektrischen Antriebsmotors der Rückförderpump-Einheit des ABS gemäß Fig. 1.

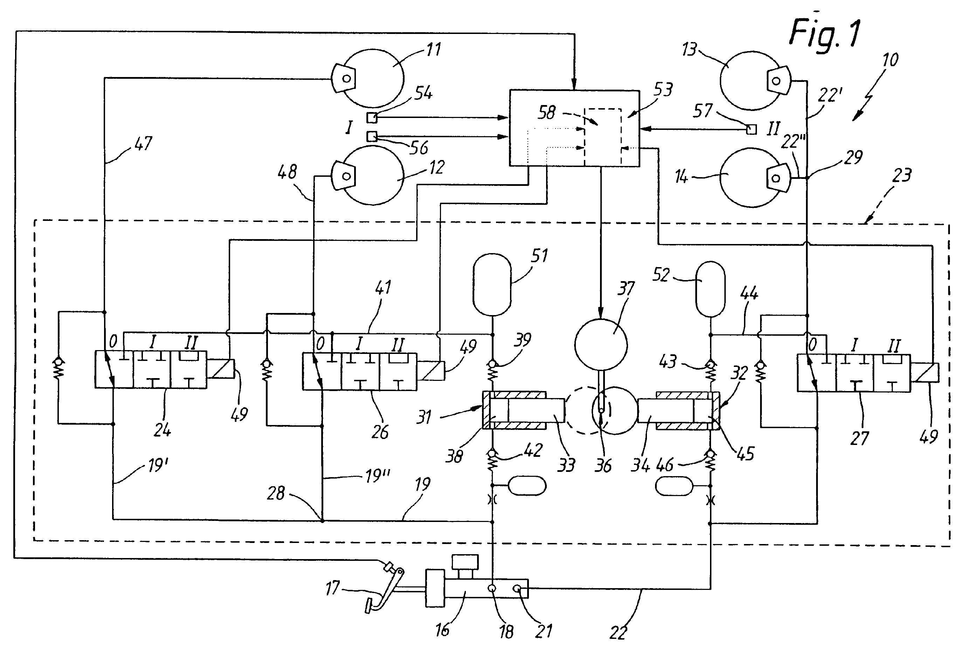

In der Figur 1 ist durch eine insgesamt mit 10 bezeichnete hydraulische Zweikreis-Bremsanlage ein Straßenfahrzeug repräsentiert, dessen Vorderradbremsen 11 und 12 zu einem Vorderachs-Bremskreis I und dessen Hinterrad-Bremsen 13 und 14 zu einem Hinterachs-Bremskreis II zusammengefaßt sind. Ein zur Betätigung der Bremsanlage 10 vorgesehenes Bremsgerät 16, das mittels eines Bremspedals 17 betätigbar ist, ist als - statischer - Tandem-Hauptzylinder vorausgesetzt, an dessen primären Druckausgang 18 die Hauptbremsleitung 19 des Vorderachs-Bremskreises I und an dessen sekundärem Druckausgang 21 die Hauptbremsleitung 22 des Hinterachs-Bremskreises II angeschlossen ist.

Das Fahrzeug ist mit einem insgesamt mit 23 bezeichneten Antiblockiersystem (ABS) ausgerüstet, das am Vorderachs-Bremskreis I mit individueller Bremsdruck-Regelung an den Vorderrad-Bremsen 11 und 12 und am Hinterachs-Bremskreis II mit gemeinsamer Bremsdruckregelung nach dem Select-Low-Prinzip an den Hinterrad-Bremsen 13 und 14 arbeitet.

Dieses ABS 23 umfaßt demgemäß der rechten Vorderrad-Bremse 11 und der linken Vorderrad-Bremse 12 je einzeln zugeordnete Bremsdruck-Regelventile 24 und 26 und ein den beiden Hinterrad-Bremsen 13 und 14 gemeinsam zugeordnetes Bremsdruck-Regelventil 27, mittels derer an den Vorderrad-Bremsen 11 und 12 einzeln, an den Hinterrad-Bremsen 13 und 14 gemeinsam Bremsdruck-Aufbau-Bremsdruck-Halte- und Bremsdruck-Abbau-Phasen steuerbar sind.

Die beiden Bremsdruck-Regelventile 24 und 26 sind, je einzeln, zwischen die Verzweigungsstelle 28, von der die zu den beiden Vorderrad-Bremsen 11 und 12 führenden Bremsleitungszweige 19' und 19'' ausgehen und die jeweilige Vorderrad-Bremse 11 bzw. 12 geschaltet, während das Bremsdruck-Regelventil 27 des Hinterachs-Bremskreises II zwischen den dem Hinterachs-Bremskreis II zugeordneten Druckausgang 21 des Bremsgeräts und die Verzweigungsstelle 29 geschaltet ist, von der die zu den beiden Hinterrad-Bremsen 13 und 14 weiterführenden Bremsleitungszweige 22' und 22'' ausgehen.

Das ABS 23 arbeitet nach dem Rückförderprinzip, wonach in Bremsdruck-Abbau-Phasen der Antiblockier-Regelung aus einer der Regelung unterworfenen Radbremse(n) 11 und/oder 12 des Vorderachs-Bremskreises I bzw. 13 und/oder 14 des Hinterachs-Bremskreises II mittels je einer dem Vorderachs-Bremskreis I bzw. dem Hinterachs-Bremskreis II zugeordneten Rückförderpumpe 31 bzw. 32 in die Hauptbremsleitung 19 des Vorderachs-Bremskreises I bzw. die Hauptbremsleitung 22 des Hinterachs-Bremskreises II und damit eine der jeweils abgelassenen Bremsflüssigkeitsmenge entsprechende Menge an Bremsflüssigkeit in die für den Vorderachs-Bremskreis I bzw. den Hinterachs-Bremskreis II vorgesehenen Ausgangsdruckräume des Bremsgeräts 16 zurückgepumpt wird.

Die beiden Rückförderpumpen 31 und 32 sind als Freikolbenpumpen ausgebildet, die einen gemeinsamen, auf ihre Kolben 33 bzw. 34 wirkenden, insgesamt mit 36 bezeichneten Exzenter-Antrieb mit elektrischem Antriebsmotor 37 haben.

Die Pumpenkammer 38 der dem Vorderachs-Bremskreis I zugeordneten Rückförderpumpe 31 ist über ein Eingangs-Rückschlagventil 39 an eine Rücklaufleitung 41 des Vorderachs-Bremskreises I und über ein Ausgangs-Rückschlagventil 42 an die Hauptbremsleitung 19 des Vorderachs-Bremskreises I angeschlossen.

Die Pumpenkammer 45 der dem Hinterachs-Bremskreis II zugeordneten Rückförderpumpe 32 ist ebenfalls über ein Eingangs-Rückschlagventil 43 an eine Rücklaufleitung 44 des Hinterachs-Bremskreises II und über ein Ausgangs-Rückschlagventil 46 an die Hauptbremsleitung 22 des Hinterachs-Bremskreises II angeschlossen.

Die den Vorderradbremsen 11 und 12 je einzeln zugeordneten Bremsdruck-Regelventil 24 und 26 und das den Hinterrad-Bremsen 13 und 14 gemeinsam zugeordnete Bremsdruck-Regelventil 27 sind als 3/3-Wege-Magnet-Ventile ausgebildet, deren Grundstellung O eine Durchflußstellung ist, in welcher die zu den Vorderrad-Bremsen 11 und 12 weiterführenden Bremsleitungszweige 47 und 48 und die zu den Hinterrad-Bremsen 13 und 14 führenden Bremsleitungszweige 22' und 22'' mit der Hauptbremsleitung 19 des Vorderachs-Bremskreises I bzw. der Hauptbremsleitung 22 des Hinterachs-Bremskreises II verbunden, jedoch gegen die Rücklaufleitungen 41 bzw. 44 abgesperrt sind. Diese Grundstellung O ist dem normalen, d.h. einer Bremsdruck-Regelung nicht unterworfenen Bremsbetrieb zugeordnet, sowie Bremsdruck-Wiederaufbau-Phasen der Antiblockier-Regelung. Durch Ansteuerung ihrer Steuermagnete 49 mit definierter - relativ niedriger - Stromstärke von z.B. 3 A sind diese Bremsdruck-Regelventile 24, 26 und 27 einzeln oder gemeinsam in eine erste erregte Stellung I - die Bremsdruck-Halte-Stellung - umschaltbar, in welcher die Radbremsen 11 und/oder 12 bzw. 13 und 14 sowohl gegen die Hauptbremsleitung 19 als auch die Rücklaufleitung 41 des Vorderachs-Bremskreises I bzw. die Hauptbremsleitung 22 und die Rücklaufleitung 44 des Hinterachs-Bremskreises II abgesperrt sind. Durch Erregung der Steuermagnete 49 mit einem Steuersignal definierter, höherer Stromstärke von z.B. 6 A sind die Bremsdruck-Regelventile 24 und 26 bzw. 27 einzeln oder gemeinsam in eine zweite erregte Stellung II - die Bremsdruck-Abbau-Stellung - steuerbar, in der die Vorderrad-Bremsen 11 und 12 einzeln oder gemeinsam an die Rücklaufleitung 41 des Vorderachs-Bremskreises I angeschlossen und gegen dessen Hauptbremsleitung 19 abgesperrt sind bzw. die Hinterrad-Bremsen 13 und 14 gemeinsam an die Rücklaufleitung 44 des Hinterachs-Bremskreises II angeschlossen und gegen dessen Hauptbremsleitung 22 abgesperrt sind.

An die Rücklaufleitungen 41 und 44 des Vorderachs-Bremskreises I bzw. des Hinterachs-Bremskreises II ist je ein Niederdruck-Speicher 50 bzw. 52 angeschlossen, dessen Aufnahmekapazität etwa der Hälfte desjenigen Bremsflüssigkeitsvolumens entspricht, das bei höchstmöglichen Werten des Bremsdruckes in die Radbremsen 11 und 12 des Vorderachs-Bremskreises I und die an diese angeschlossenen Bremsleitungszweige 47 und 48 bzw. die Hinterrad-Bremsen 13 und 14 angeschlossenen Radbremsleitungen 22' und 22'' hineinverdrängt wird. Entsprechend der Auslegung der Vorderrad-Bremsen 11 und 12 und der Hinterrad-Bremsen 13 und 14 ist die Aufnahmekapazität des Niederdruckspeichers 51 des Vorderachs-Bremskreises I etwa doppelt so groß wie die Aufnahmekapazität des Niederdruck-Speichers 52 des Hinterachs-Bremskreises II. Die Niederdruck-Speicher 51 und 52 wirken als Pufferspeicher, die aus einer der Regelung unterworfenen Radbremse 11 und/oder 12 bzw. 13 und 14 abgelassene Bremsflüssigkeit sehr "schnell" in der für eine rasche Bremsdruck-Absenkung erforderlichen Menge aufnehmen können, bevor diese Bremsflüssigkeit dann mit der jeweiligen Rückförderpumpe 31 und/oder 32 in die Hauptbremsleitung 19 bzw. 22 des Vorderachs-Bremskreises I und/oder des Hinterachs-Bremskreises II und damit zum Bremsgerät 16 hin zurückgepumpt wird, wobei das Fördervolumen der Rückförderpumpen 31 und 32 pro Kolbenhub etwa 1/20 bis 1/10 der Aufnahmekapazität des Niederdruck-Speichers 51 bzw. des Niederdruck-Speichers 52 beträgt.

Die für die regelungsgerechte Ansteuerung der Bremsdruck-Regelventile 24, 26 und 27 sowie des Pumpen-Antriebsmotors 37 werden von einer elektronischen Steuereinheit 53 aus einer nach bekannten Kriterien erfolgenden Verarbeitung der Ausgangssignale von Raddrehzahlsensoren 54, 56 und 57 erzeugt, deren Ausgangssignale nach Pegel und/oder Frequenz die Information über das dynamische Verhalten der Fahrzeugräder beinhalten.

Das ABS 23 entspricht, soweit bislang erläutert, dem bei zahlreichen Fahrzeugtypen heute serienmäßig eingesetzten ABS.

Im Unterschied zu diesem - bekannten - ABS, bei dem der Rückförderpumpenantrieb 37 mit dem Einsetzen der Antiblockier-Regelung, d.h. mit Beginn der einen Antiblockier-Regelzyklus einleitenden Druckabbau-Phase mit seiner höchstmöglichen Drehzahl angetrieben wird, ist im Rahmen der elektronischen Steuereinheit 53 des ABS 23 - erfindungsgemäß - eine insgesamt mit 58 bezeichnete Steuerstufe für eine Antriebssteuerung des Antriebsmotors 37 der Rückförderpumpen 31 und 32 vorgesehen, die eine Steuerung der Drehzahl des Rückförderpumpen-Antriebsmotors 37 dahingehend vermittelt, daß dieser bei nur kurz dauernden Bremsdruck-Absenkungsphasen an einer oder mehrerer der Radbremsen 11 bis 14 der Antriebsmotor 37 mit nur geringer Drehzahl betrieben und mit zunehmender Dauer solcher Druckabsenkungs-Phasen die Antriebsdrehzahl des Pumpen-Antriebsmotors 37 zunehmend gesteigert wird und, falls ein Mindestwert der Dauer der Druckabsenkungs-Phase(n) erreicht wird, hiernach die Drehzahl des Antriebsmotors 37 auf einem konstanten Höchstwert gehalten wird und danach die Drehzahl des Antriebsmotors 37 wieder stetig oder in kleinen Schritten reduziert wird, bis der/die Pufferspeicher 51 und/oder 52 "leergepumpt" sind.

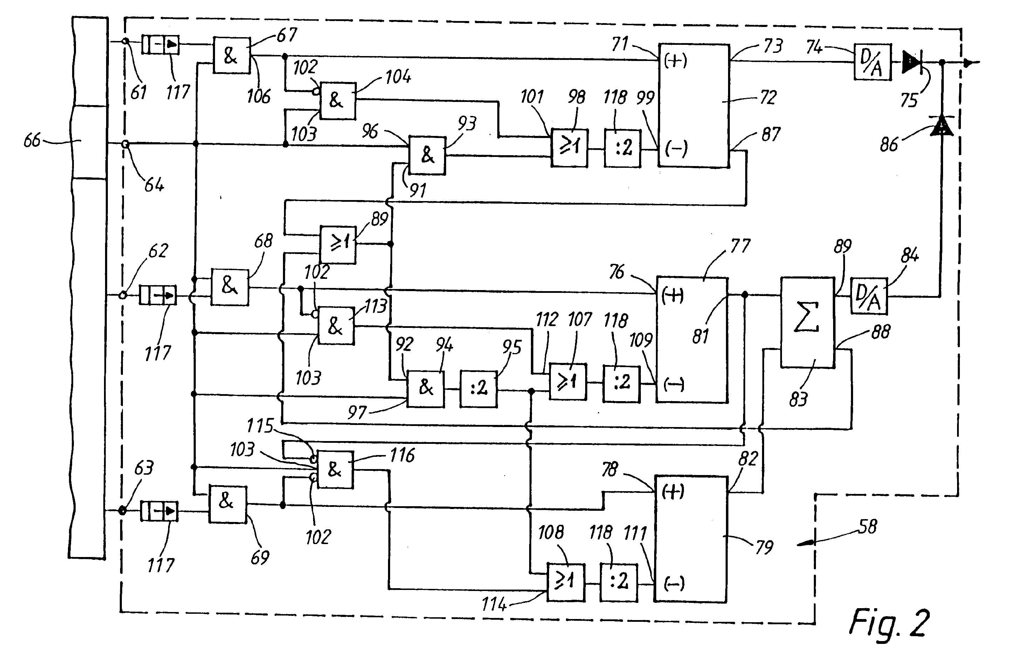

Zur Erläuterung dieser Steuerstufe 58 sei nunmehr auf das Blockschaltbild der Figur 2 verwiesen, das den prinzipiellen Aufbau dieser Steuerstufe 58 zeigt.

Der Steuerstufe 58 ist an einem ersten Eingang 61 ein von der elektronischen Steuereinheit 53 intern erzeugtes Gleichspannungs-Signal zugeleitet, das als Hoch-Pegel-Signal (logische I) ansteht, wenn und solange das Bremsdruck-Regelventil 27 des Hinterachs-Bremskreises II in seine Druckabbau-Stellung II gesteuert ist. Einem zweiten Eingang 62 ist der Steuerstufe 58 ein entsprechendes Spannungssignal zugeleitet, das als Hoch-Pegel-Signal ansteht, wenn und solange das Bremsdruck-Regelventil 24, das der rechten Vorderradbremse 11 zugeordnet ist, in seine Druckabbau-Stellung II geschaltet ist.

Das entsprechende Spannungssignal für den Fall, daß das der linken Vorderrad-Bremse 12 zugeordnete Bremsdruck-Regelventil 26 in dessen Druckabbau-Stellung II geschaltet ist, ist der Steuerstufe 58 an deren drittem Eingang 63 zugeleitet. Diese Signale werden nachfolgend als "Druckabbau-Signale" bezeichnet.

An einem vierten Eingang 64 sind der Steuerstufe 58 die Ausgangsimpulse eines im Rahmen der elektronischen Steuereinheit 53 vorgesehenen Taktgebers 66 zugeleitet, die als periodische, hochfrequente Folge von Hoch- und Niedrig-Pegelimpulsen erzeugt werden, deren Hoch-Pegel demjenigen der Druckabbau-Signale entspricht.

Die an dem ersten bis dritten Eingang 61 bis 63 von der Steuerstufe 58 empfangenen Druckabbau-Signale sind dem einen Eingang je eines ersten 2-Eingangs-UND-Gliedes 67, eines zweiten 2-Eingangs-UND-Gliedes 68 und eines dritten 2-Eingangs-UND-Gliedes 69 zugeleitet, denen am jeweils anderen Eingang die am vierten Eingang 64 der Steuerstufe 58 empfangenen Taktgeber-Ausgangsimpulse zugeleitet sind.

Die Ausgangssignale dieser UND-Glieder 67, 68 und 69 sind somit im Takt der Ausgangssignale des Taktgebers 67 erzeugte Folgen von Impulsen, deren Anzahl jeweils ein Maß für die Dauer von Druckabbau-Phasen am Hinterachs-Bremskreis II sowie von Druckabbau-Phasen an der rechten Vorderrad-Bremse 11 - UND-Glied 68 - bzw. an der linken Vorderrad-Bremse 12 - UND-Glied 64 - sind. Diese Ausgangssignale der UND-Glieder 67, 68 und 69 werden nachfolgend als "Druckabbau-Impulse" bezeichnet.

Die für die Dauer von Druckabbau-Phasen am Hinterachs-Bremskreis II erzeugten Druckabbau-Impulse des UND-Gliedes 67 sind dem Plus-Zähleingang 71 eines ersten Vorwärts-/Rückwärts-Zählers 72 zugeleitet, dessen an einem ersten Ausgang 73 abgegebenes Zählerstands-Ausgangssignal somit ein Maß für den Aufladungs-zustand des dem Hinterachs-Bremskreis II zugeordneten Pufferspeichers 52 ist. Das an diesem Ausgang 73 des Vorwärts-/Rückwärts-Zählers 72 abgegebene Zählerstands-Ausgangssignal ist einem ersten Digital-/Analog-Wandler 74 zugeleitet, der ein zu dem Zählerstand des Vorwärts-/Rückwärts-Zählers 72 proportionales Spannungs-Ausgangssignal abgibt, dessen Spannungspegel mit zunehmendem Zählerstand ansteigt. Dieses Spannungs-Ausgangssignal des ersten Digital-/Analog-Wandlers wird nach geeigneter Verstärkung über eine erste Leistungsdiode 75 dem Antriebsmotor 37 der Rückförderpumpen 31 und 32 als Versorgungsspannung zugeleitet, wobei der Antriebsmotor 37 so ausgebildet ist, daß seine Drehzahl mit zunehmender Versorgungsspannung steigt.

Desgleichen sind die Druckabbau-Ausgangsimpulse des der rechten Vorderrad-Bremse zugeordneten UND-Gliedes 68 dem Plus-Zähleingang 76 eines zweiten Vorwärts-/Rückwärts-Zählers 77 zugeleitet und die Druckabbau-Ausgangsimpulse des der linken Vorderrad-Bremse 12 zugeordneten UND-Gliedes 69 dem Plus-Zähleingang 78 eines dritten Vorwärts-/Rückwärts-Zählers 79. Die an den Zählerausgängen 81 und 82 des zweiten Vorwärts-/Rückwärts-Zählers 77 bzw. des dritten Vorwärts-/Rückwärts-Zählers 79 anstehenden Zählerstände werden mittels eines Summierers 83 addiert, dessen Ausgangs-Zählerstand somit ein Maß für den Ladungszustand des an die Rücklaufleitung 41 des Vorderachs-Bremskreises I angeschlossenen Pufferspeichers 51 ist.

Das Zählerstands-Ausgangssignal des Summierers 83 wird mittels eines zweiten Digital-/Analog-Wandlers 84 in eine zum Ausgangs-Zählerstand des Summierers 83 proportionale, mit diesem anwachsende Versorgungsspannung für den Antriebsmotor 37 umgewandelt, die diesem über eine zweite Leistungsdiode 36 zugeführt ist.

Der Antriebsmotor 37 der Rückförderpumpen 31 und 32 wird somit jeweils mit der höheren der von den Digital-/Analog-Wandlern 74 und 84 erzeugten Versorgungsspannung betrieben.

Der erste Vorwärts-/Rückwärts-Zähler 72 hat einen zweiten Ausgang 8, an dem ein Spannungs-Ausgangssignal mit hohem Signalpegel (logische I) abgegeben wird, sobald der Zählerstand am Ausgang 73 einen vorgegebenen, hohen Zählerstand erreicht hat, der dem vollständig oder weitestgehend aufgeladenen Zustand des an die Rücklaufleitung 44 des Hinterachs-Bremskreises II angeschlossenen Pufferspeichers 52 entspricht. Desgleichen ist der Summierer mit einem Ausgang 88 versehen, an dem ein Hochpegel-Ausgangssignal (logische I) abgeben wird, sobald der am Zählerstand-Ausgang 89 des Summierers 83 anstehende Zählerstand einen Schwellenwert erreicht hat, der wiederum weitestgehender Aufladung des an die Rücklaufleitung 41 des Vorderachs-Bremskreises I angeschlossenen Pufferspeichers 51 entspricht. Diesen Zählerstands-Schwellenwerten entsprechen auch die höchstmöglichen Ausgangsspannungen, z.B. 12 V, der beiden Digital-/Analog-Wandler 74 und 84, die dann auch bei Erhöhung der an den Ausgängen 73 und 87 des ersten Vorwärts-/Rückwärtszählers 72 bzw. des Summierers 83 anstehenden Zählerstände nicht mehr anwachsen. Diese Schwellenwert-Ausgangssignale des ersten Vorwärts-/Rückwärtszählers 72 und des Summierers 83, die an deren Ausgängen 87 bzw. 88 abgegeben werden, sind einem ersten 2-Eingangs-ODER-Glied 89 zugeleitet, dessen Ausgangssignale dem einen Eingang 91 bzw. 92 je eines ersten 2-Eingangs-UND-Gliedes 93 und eines zweiten 2-Eingangs-UND-Gliedes 94 zugeleitet sind, denen am jeweils anderen Eingang 96 bzw. 97 die Ausgangsimpulse des Taktgebers 66 zugeleitet sind. Die Ausgangssignale des ersten UND-Gliedes 93, dem an seinem einen Eingang 96 die Taktgeber-Ausgangssignale zugeleitet sind, sind über ein zweites 2-Eingangs-ODER-Glied 98 dem Minus-Zähleingang 99 des ersten Vorwärts-/Rückwärts-Zählers 72 zugeleitet. An einem zweiten Eingang 101 des zweiten ODER-Gliedes 98 sind diesem die Ausgangssignale eines ersten einen negierten Eingang 102 und einen nichtnegierten Eingang 103 aufweisenden 2-Eingangs-UND-Gliedes 104 zugeleitet, dessen negierter Eingang 102 mit dem Ausgang 106 des die Druckabbau-Impulse für den ersten Vorwärts-/Rückwärts-Zählers 72 erzeugenden UND-Gliedes 67 verbunden ist, und dessen nicht-negiertem, zweitem Eingang 103 die Ausgangsimpulse des Taktgebers 66 zugeleitet sind.

Die Ausgangssignale des an seinem einen Eingang 92 mit den Ausgangssignalen des ersten 2-Eingangs-ODER-Gliedes 89 und an seinem anderen Eingang 97 mit den Taktgeber-Ausgangssignalen beaufschlagten UND-Gliedes 94 sind einer Dividierstufe 95, die ein Teilerverhältnis von 1:2 hat, zugeleitet, deren mit der halben Frequenz der Ausgangssignale des UND-Gliedes 94 abgegebenen Ausgangssignale über je ein drittes bzw. ein viertes 2-Eingangs-ODER-Glied 107 bzw. 108 dem Minus-Zähleingang 109 des zweiten Vorwärts-/Rückwärts-Zählers 77 und dem Minus-Zähleingang 111 des dritten Vorwärts-/Rückwärts-Zählers 79 zugeleitet sind. Das dem Minus-Zähleingang 109 des zweiten Vorwärts-/Rückwärts-Zählers 77 vorgeschaltete dritte 2-Eingangs-ODER-Glied 107 empfängt an seinem zweiten Eingang 112 die Ausgangssignale eines zweiten, einen nicht-negierten Eingang 102 und einen negierten Eingang 103 aufweisenden 2-Eingangs-UND-Gliedes 113, dem an seinem negierten Eingang 102 die Druckabbau-Impulse des der rechten Vorderrad-Bremse 11 zugeordneten 2-Eingangs-UND-Gliedes 68 zugeleitet sind, und das an seinem nicht-negierten Eingang 103 wiederum mit den Taktgeber-Ausgangsimpulsen beaufschlagt ist.

Dem dem Minus-Zähleingang 111 des dritten Vorwärts-/Rückwärts-Zählers 79 vorgeschalteten vierten 2-Eingangs-ODER-Glied 108 sind an seinem zweiten Eingang 114 die Ausgangssignale eines einen negierten Eingang 102 und einen nicht-negierten Eingang 103 sowie einen weiteren negierten Eingang 115 aufweisenden 3-Eingangs-UND-Gliedes 116 zugeleitet, das an seinem einen negierten Eingang 102 mit den Ausgangsimpulsen des die Druckabbau-Impulse für den dritten Vorwärts-/Rückwärts-Zähler 79 abgebenden UND-Gliedes 69, an seinem nicht-negierten Eingang 103 mit den Taktgeber-Ausgangsimpulsen und an seinem weiteren, negierten Eingang 115 mit einem Ausgangssignal des zweiten, der rechten Vorderradbremse 11 zugeordneten Vorwärts-/Rückwärts-Zählers 77 beaufschlagt ist, das solange als Hochpegel-Ausgangssignal ansteht, wie der am Ausgang 81 dieses Vorwärts-/Rückwärts-Zählers 77 abrufbare Zählerstand größer oder gleich I ist.

Die Funktion der insoweit ihrem Aufbau nach erläuterten - erfindungsgemäßen - Steuerstufe 58 ist die folgende:

Sobald, beispielsweise am Hinterachs-Bremskreis II eine Bremsdruck-Abbauphase der Antiblockier-Regelung beginnt, gibt das an den ersten Eingang 61 der Steuerstufe 58 angeschlossene UND-Glied 67 eine Folge von Druckabbau-Impulsen ab, durch die sich zunächst der am Ausgang 73 des ersten Vorwärts-/Rückwärts-Zählers 72 abrufbare Zählerstand erhöht, wodurch mit zunehmender Dauer der Druckabbau-Phase die Ausgangsspannung des ersten Digital-/Analog-Wandlers 74 ansteigt und der Rückförder-Pumpen-Antriebsmotor 37 zunächst langsam und dann mit zunehmender Drehzahl angetrieben wird, womit auch die Förderleistung der in dieser Situation allein wirksame Rückförderpumpe 32, die dem Hinterachs-Bremskreis II zugeordnet ist, steigt. Dauert diese Druckabbau-Phase nur eine relativ kurze Zeitspanne, so daß der Puffer-Speicher 52 des Hinterachs-Bremskreises II nur zu einem Teil aufgeladen wird und der Zählerstand des ersten Vorwärts-/Rückwärts-Zählers 72 den mit maximaler Ausgangsspannung des ersten Digital-/Analog-Wandlers 74 und damit auch maximaler Drehzahl des Pumpen-Antriebsmotors 37 korrelierten Schwellenwert nicht übersteigt, so werden von dem ersten, einen negierten Eingang 102 aufweisenden UND-Glied 104, sobald die Ausgangs-Impulsfolge des UND-Gliedes 67 abbricht und daher dessen Ausgangssignal ein Niedrig-Pegel-Signal ist, mit der Taktgeberfrequenz Ausgangsimpulse abgegeben, die über das zweite, dem Minus-Zähleingang 99 des ersten Vorwärts-/Rückwärts-Zählers 72 vorgeschaltete ODER-Glied diesem Minus-Zähleingang 99 zugeleitet sind, wodurch der Zählerstand am Ausgang 73 des ersten Vorwärts-/Rückwärts-Zählers 72 sukzessive erniedrigt wird und die Versorgungsspannung für den Pumpen-Antriebsmotor 37 entsprechend abnimmt, bis dieser schließlich wieder zum Stehen kommt und der Rückförderbetrieb dadurch beendet wird.

Dauert die Druckabbau-Phase am Hinterachs-Bremskreis II jedoch länger, so daß der Zählerstand am Ausgang 73 des ersten Vorwärts-/Rückwärts-Zählers 72 einen vorgegebenen Schwellenwert erreicht, was mit maximaler Versorgungs-Ausgangsspannung des ersten Digital-/Analog-Wandlers 74 und Antrieb des Rückförder-Pumpen-Antriebsmotors 37 mit dessen höchstmöglicher Drehzahl verknüpft ist, so wird am zweiten Ausgang 87 des ersten Vorwärts-/Rückwärts-Zählers 72 ein Hochpegel-Ausgangssignal abgegeben, durch dessen über das erste 2-Eingangs-ODER-Glied 89 und das erste 2-Eingangs-UND-Glied 93 erfolgende Verknüpfung mit den Taktgeber-Ausgangsimpulsen dem Minus-Zähleingang 99 des ersten Vorwärts-/Rückwärts-Zählers 72 synchron mit den von dem UND-Glied 67 auch weiterhin abgegebenen Druckabbau-Impulsen Rückzähl-Impulse zugeleitet werden, mit der Folge, daß der Zählerstand am Ausgang 73 des ersten Vorwärts-/Rückwärts-Zählers 72 konstant auf dem hohen Schwellenwert bleibt und der Rückförderpumpen-Antriebsmotor 37 weiterhin mit höchstmöglicher Drehzahl angetrieben wird, was auch höchstmöglicher Förderleistung der Rückförderpumpen 31 und 32 entspricht. Klingt die Druckabbau-Phase ab, so erfolgt die "Rückzählung" des ersten Vorwärts-/Rückwärts-Zählers 72 analog zu der vorstehend erläuterten Situation, bei der der Schwellenwert des Zählerstandes nicht erreicht worden ist, nämlich wiederum durch die Rückzähl-Ausgangsimpulse des ersten, einen negierten Eingang 102 aufweisenden UND-Gliedes 104.

Die Funktion der Steuerstufe 58 ist bezüglich der Ansteuerung des Antriebsmotors 37 der Rückförderpumpen 31 und 32, wenn Druckabsenkungs-Phasen an der rechten Vorderrad-Bremse 11 und/oder der linken Vorderrad-Bremse 12 ablaufen, zu der vorstehend für den Fall eines Druckabsenkungs-Betriebs am Hinterachs-Bremskreis II völlig analog, abgesehen von dem Unterschied, daß die Konstanthaltung der Ausgangs-Zählerstände des zweiten Vorwärts-/Rückwärts-Zählers 77 und des dritten Vorwärts-/Rückwärts-Zählers 79 durch Erzeugung von Rückzählimpulsen mittels des UND-Gliedes 94 dann einsetzt, wenn der Ausgangs-Zählerstand des Summierers 83 den vorgegebenen Schwellenwert erreicht, der Erschöpfung des den Vorderrad-Bremsen 11 und 12 gemeinsam zugeordneten Pufferspeichers 51 signalisiert. Die "Rückzählung" des zweiten, der rechten Vorderrad-Bremse zugeordneten Vorwärts-/Rückwärts-Zählers 77 sowie des dritten, der linken Hinterrad-Bremse 12 zugeordneten Vorwärts-/Rückwärts-Zählers 79 erfolgt jedoch durch die Ausgangssignale des zweiten und des dritten UND-Gliedes 113 bzw. 116 mit negiertem Eingang 102 "separat", um bei unterschiedlichen Beiträgen der beiden Vorderrad-Bremsen 11 und 12 zur Aufladung des Pufferspeichers dessen bedarfsgerechte Entladung mittels der Rückförderpumpe 31 zu gewährleisten, d.h. den Antriebs-Motor 37 der Ruckförderpumpen 31 und 32 hinreichend lange anzutreiben.

Um sicherzustellen, daß nach einem Abklingen einer Druckabbau-Phase am Vorderachs-Bremskreis I und/oder am Hinterachs-Bremskreis II die Pufferspeicher 51 und 52 leergepumpt sind, sind alternativ oder in Kombination die folgenden Maßnahmen geeignet und in speziellen Gestaltungen der Steuerstufe 58 auch vorgesehen:
1. Abfallverzögerung der über die Eingänge 61, 62 und 63 der Steuerstufe 58 den UND-Gliedern 67, 68 und 69 zugeleiteten Druckabbau-Signale gegenüber denjenigen Druckabbau-Steuersignalen, die den Bremsdruck-Regelventilen 24 und/oder 26 bzw. 27 zugeleitet sind. Durch diese Maßnahme, die mittels einfacher Zeitverzögerungsglieder 117 realisierbar ist, wird eine längere Dauer der Druckabbau-Phasen simuliert, was im Ergebnis zu einer Verlängerung des Betriebes der Rückförderpumpen 31 und 32 führt.
2. Zwischenschaltung von Dividierstufen 108 zwischen die Minus-Eingänge 99, 109 und 111 der Vorwärts-/Rückwärts-Zähler 72, 77 und 79 und die diesen vorgeschalteten ODER-Glieder 98 und 107 sowie 108. Dadurch wird die Frequenz der Rückzählimpulse gegenüber derjenigen der Hoch-Zählimpulse erniedrigt, so daß sich erhöhte Ausgangs-Zählerstände ergeben mit der Folge, daß die Rückförder-Betriebsphasen der Rückförderpumpen entsprechend verlängert werden, wodurch ebenfalls gewährleistet wird, daß die Niederdruck-Speicher 51 und 52 mit Abschluß der Druckabbau-Phasen leergepumpt sind.
3. Kurzzeitige Aktivierung des Rückförder-Pumpenantriebes 37 bei Bremsbeginn, z.B. gesteuert durch ein Ausgangssignal des Bremslichtschalters 119.

## Patentansprüche

1. Steuerstufe (58) für die Antriebssteuerung des Antriebsmotors der Rückförderpump-Einheit eines Antiblockier-Systems (ABS) für ein Straßenfahrzeug mit statischen Bremskreisen, wobei das ABS nach dem Rückförderprinzip arbeitet, gemäß welchem Bremsflüssigkeit, die während einer Druckabbau-Phase an einer der Regelung unterworfenen Radbremse über ein durch ein Druckabbau-Signal der elektronischen ABS-Steuereinheit in seine Druckabbau-Stellung gesteuertes Bremsdruck-Regelventil (24,26,27) und eine Rücklaufleitung (41,44) in einen Niederdruck-Speicher (51,52) abgelassen wird, mittels der Rückförder-Pumpe(n) (31,32) in die Hauptbremsleitung (19,22) des jeweiligen Bremskreises zurückgepumpt und dadurch eine der abgelassenen entsprechende Bremsflüssigkeitsmenge in das Bremsgerät zurückgefördert wird, wobei der Pumpenantrieb für mindestens die Dauer der Druckabbau-Phase aktiviert ist und der Antriebsmotor (37) als Elektromotor ausgebildet ist, dessen Drehzahl zur Betriebsspannung proportional ist,
**dadurch gekennzeichnet**,
daß die Steuerstufe (58) ab dem Einsetzen eines Druckabbau-Signals eine mit zunehmender Dauer dieses Signals ansteigende Betriebsspannung für den Antriebsmotor (37) erzeugt, die nach einer vorgegebenen Anstiegszeit einen mit maximaler Drehzahl des Motors (37) korrelierten Höchstwert erreichen kann und dann mindestens-bis zum Abklingen des Druckabbausignals auf diesem Wert gehalten wird, ansonsten bis zu demjenigen Wert ansteigt, der innerhalb der Druckabbau-Signaldauer erreicht wird, und daß die Steuerstufe (58) eine mit dem Abfallen des Druckabbau-Signals einsetzende - stetige oder schrittweise - Reduzierung der Betriebsspannung des Motors (37) bis zu dessen Stillstand dahingehend steuert, daß das zeitliche Integral der Betriebsspannung über die Reduzierung der Betriebsspannung mindestens dem zeitlichen Integral über die Anstiegszeit der Betriebsspannung entspricht.

2. Steuerstufe nach Anspruch 1,
**dadurch gekennzeichnet,**
daß für die Erzeugung der dem Antriebsmotor (37) der Rückförderpumpen (31 und 32) zugeleiteten Betriebsspannung mindestens ein Digital-/Analog-Wandler (74) vorgesehen ist, der den Augangs-Zählerstand eines Vorwärts-/Rückwärts-Zählers (72) in eine dazu proportionale Spannung wandelt, daß diesem Vorwärts-/Rückwärts-Zähler (72) an seinem Plus-Zähleingang (71) während der Dauer des Druckabbau-Signals in einem festen Takt erzeugte Hochzählimpulse zugeleitet sind, und dessen Minus-Zähleingang (99) nach dem Abklingen des Druckabbau-Signals fortlaufend erzeugte Rückzähl-Impulse zugeleitet werden, die für die Dauer des Druckabbau-Signals unterdrückt sind, wobei die Folgefrequenz der Rückzählimpulse höchstens gleich derjenigen der Hochzählimpulse ist.

3. Steuerstufe nach Anspruch 2,
**dadurch gekennzeichnet**,
daß zur Erzeugung der Hochzähl-Impulse mindestens ein UND-Verknüpfungsglied (67,68,69) vorgesehen ist, das an einem von zwei Eingängen mit dem Druckabbau-Signal und an dem anderen Eingang mit hochfrequenten Ausgangsimpulsen eines Takt-Impulsgebers (66) beaufschlagt ist, und daß zur Erzeugung der Rückzählimpulse mindestens ein UND-Verknüpfungsglied (104,113) vorgesehen ist, das mindestens einen negierten Eingang (102) hat, an dem es mit dem Ausgangssignal des jeweiligen UND-Gliedes (67,68,69) beaufschlagt ist, sowie einen nicht-negierten Eingang (103), an dem es mit den Ausgangsimpulsen des Taktimpulsgebers (66) beaufschlagt ist.

4. Steuerstufe nach Anspruch 2 oder Anspruch 3 für ein ABS, bei dem mindestens zwei unabhängig voneinander der Regelung unterwerfbare Radbremsen (11 und 12) vorgesehen sind, aus denen über je ein Bremsdruck-Regelventil (24 und 26) Bremsflüssigkeit in eine Rücklaufleitung (41) und einen an diese angeschlossenen Niederdruckspeicher (51) ablaßbar ist,
**dadurch gekennzeichnet**,
daß mit den zur separaten Druckabbau-Steuerung dieser Bremsdruck-Regelventile (24 und 26) erzeugten Druckabbau-Signalen je ein Vorwärts-/Rückwärts-Zähler (77 und 79) ansteuerbar ist, deren Ausgangszählerstände mittels eines digitalen Summierers (83) aufsummiert werden, und daß das in digitalem Format anstehende Summierer-Ausgangssignal mittels eines Digital-/Analog-Wandlers (84) in die Betriebsspannung des Pumpen-Antriebsmotors (37) gewandelt wird.

5. Steuerstufe nach Anspruch 4,
daß ab einem mit maximaler Betriebsspannung für den Pumpenantriebsmotor (37) verknüpften Zählerstand eines Vorwärts-/Rückwärts-Zählers (72) bzw. des Summierers (83) dieser ein als Gleichspannungs-Signal anstehendes Signal erzeugt, aus dessen UND-Verknüpfung mit den Ausgangsimpulsen des Taktimpulsgebers (66) Rücksetzimpulse für den bzw. die Zähler (72 bzw. 77 und 79) erzeugt werden, wobei die Frequenz der den beiden Vorwärts-/Rückwärts-Zählern (77 und 79) die den beiden Bremsdruck-Regelventilen (24 und 26) der in einem Bremskreis (I) zusammengefaßten Radbremsen (11 und 12) zugeordnet sind, gleichzeitig zugeleiteten Rücksetz-Impulse mittels einer 1/2-Dividierstufe (95) gegenüber der Frequenz der diesen beiden Vorwärts-/Rückwärts-Zählern (77 und 79) zugeleiteten Hochzählimpulse halbiert ist.

6. Steuerstufe nach Anspruch 5,
**dadurch gekennzeichnet**,
daß die beiden Vorwärts-/Rückwärts-Zähler (77 und 79) deren Zählerstände ein Maß für die Dauer der an den separat regelbaren Radbremsen (11 und 12) ablaufenden Druckabbau-Phasen sind, nach Ablauf derselben nacheinander zurückgezählt werden.

7. Steuerstufe nach einem der Ansprüche 1 bis 6,
**dadurch gekennzeichnet**,
daß der Anstieg der Betriebsspannung und die Reduzierung der Betriebsspannung zeitlinear erfolgen, und daß die Dauer des Spannungsabbaues größer ist als die Dauer des Anstieges der Betriebsspannung des Antriebsmotors (37).

8. Steuerstufe nach einem der Ansprüche 2 - 7,
**dadurch gekennzeichnet**,
daß die Frequenz der dem Minus-Zähleingang (99,109,111) des Vorwärts-/Rückwärts-Zählers (72,77,79) zugeleiteten Rückzählimpulse niedriger ist als diejenige der Hochzähl-Impulse.

9. Steuerstufe nach Anspruch 8,
**dadurch gekennzeichnet,**
daß dem Minus-Zähleingang des Vorwärts-/Rückwärts-Zählers (72,77,79) eine Dividierstufe (118) vorgeschaltet ist.

10. Steuerstufe nach einem der Ansprüche 2 bis 9,
**dadurch gekennzeichnet,**
daß das für mindestens die Dauer der Druckabbau-Phasen als Gleichspannungs-Signal anstehende, dem einen Eingang des jeweils die Hochzähl-Impulse abgebenden UND-Gliedes (67,68,69) zugeleitete Signal als mit dem Druckabbau-Signal einsetzendes, gegenüber diesem jedoch abfallverzögertes Signal erzeugt wird.

11. Steuerstufe nach einem der Ansprüche 1 bis 10,
**dadurch gekennzeichnet,**
daß am Beginn einer Bremsung eine kurzzeitige Aktivierung des Rückförderpumpen-Antriebsmotors (37) vermittelndes Versorgungsspannungs-Signal erzeugt wird.

## Claims

1. Control stage (58) for the drive control of the drive motor of the recirculating pump unit of an antilock braking system (ABS) for a road vehicle with static brake circuits, the ABS operating on the recirculation principle, according to which brake fluid which is drained out during a pressure reduction phase at a wheel brake subjected to automatic control via a brake-pressure control valve (24, 26, 27), which is controlled by a pressure reduction signal of the electronic ABS control unit into its pressure reduction position, and a return line (41, 44) into a low-pressure accumulator (51, 52), is pumped back by means of the recirculating pump(s) (31, 32) into the main brake line (19, 22) of the respective brake circuit and, as a result, a quantity of brake fluid corresponding to the drained quantity is recirculated into the brake booster, the pump drive being activated for at least the duration of the pressure reduction phase and the drive motor (37) being designed as an electric motor, the speed of which is proportional to the operating voltage, characterized in that, from the onset of a pressure reduction signal, the control stage (58) generates an operating voltage for the drive motor (37) which rises with increasing duration of this signal and, after a predetermined rising time, can reach a maximum value correlated with maximum speed of the motor (37) and then is held at this value at least until the pressure reduction signal dies out, or otherwise rises up to that value which is reached within the pressure-reduction signal duration, and in that the control stage (58) controls a - constant or stepwise - reduction of the operating voltage of the motor (37), commencing upon the dropping of the pressure reduction signal, until the standstill of the said motor, in such a way that the time integral of the operating voltage over the reduction of the operating voltage corresponds at least to the time integral over the rising time of the operating voltage.

2. Control stage according to Claim 1, characterized in that, for generating the operating voltage fed to the drive motor (37) of the recirculating pumps (31 and 32), at least one digital/analog converter (74) is provided, which converts the output counter reading of a forward/ backward counter (72) into a voltage proportional thereto, in that, during the duration of the pressure reduction signal, this forward/backward counter (72) is fed at its plus counting input (71) upward-counting pulses generated at a fixed clock rate, and after dying-out of the pressure reduction signal, the minus counting input (99) of the said counter is fed continuously generated backward-counting pulses, which are suppressed for the duration of the pressure reduction signal, the repetition frequency of the backward-counting pulses being at most equal to that of the upward-counting pulses.

3. Control stage according to Claim 2, characterized in that at least one AND logic element (67, 68, 69) is provided for generating the upward-counting pulses, which element receives at one of two inputs the pressure reduction signal and at the other input high-frequency output pulses of a clock pulse generator (66), and in that at least one AND logic element (104, 113) is provided for generating the backward-counting pulses, which element has at least one negated input (102), at which it receives the output signal of the respective AND element (67, 68, 69), as well as a non-negated input (103), at which it receives the output pulses of the clock pulse generator (66).

4. Control stage according to Claim 2 or Claim 3 for an ABS, in which there are provided at least two wheel brakes (11 and 12), which, independently of each other, can be subjected to automatic control and from which brake fluid can be drained via a respective brake-pressure control valve (24 and 26) into a return line (41) and a low-pressure accumulator (51) connected to the latter, characterized in that, with the pressure reduction signals generated for the separate pressure reduction control of these brake-pressure control valves (24 and 26), a respective forward/backward counter (77 and 79) can be actuated, the output counter readings of which are added up by means of a digital adder (83), and in that the adder output signal, available in digital format, is converted by means of a digital/analog converter (84) into the operating voltage of the pump drive motor (37).

5. Control stage according to Claim 4, characterized in that, as from a counter reading of a forward/backward counter (72) or of the adder (83) with which maximum operating voltage for the pump drive motor (37) is associated, the said counter or adder generates a signal which is available as direct-voltage signal, from the AND logical combining of which with the output pulses of the clock pulse generator (66) reset pulses for the counter or counters (72 or 77 and 79) are generated, the frequency of the reset pulses fed simultaneously to the two forward/backward counters (77 and 79) which are assigned to two brake-pressure control valves (24 and 26) of the wheel brakes (11 and 12) combined in one brake circuit (I), being halved by means of a 1/2 dividing stage (95) with respect to the frequency of the upward-counting pulses fed to these two forward/backward counters (77 and 79).

6. Control stage according to Claim 5, characterized in that the two forward/backward counters (77 and 79) of which the counter readings are a measure of the duration of the pressure reduction phases occurring at the separately controllable wheel brakes (11 and 12) are successively counted back after the elapse of the said phases.

7. Control stage according to one of Claims 1 to 6, characterized in that the rise of the operating voltage and the reduction of the operating voltage take place time-linearly, and in that the duration of the voltage reduction is greater than the duration of the rise of the operating voltage of the drive motor (37).

8. Control stage according to one of Claims 2 - 7, characterized in that the frequency of the backward-counting pulses fed to the minus counting input (99, 109, 111) of the forward/backward counter (72, 77, 79) is lower than that of the upward-counting pulses.

9. Control stage according to Claim 8, characterized in that the minus counting input of the forward/backward counter (72, 77, 79) is preceded by a dividing stage (118).

10. Control stage according to one of Claims 2 to 9, characterized in that the signal which is available as direct-voltage signal for at least the duration of the pressure reduction phases and is fed to an input of the AND element (67, 68, 69) respectively emitting the upward-counting pulses, is generated as a signal which commences with the pressure reduction signal but is drop-delayed with respect to the latter.

11. Control stage according to one of Claims 1 to 10, characterized in that, at the beginning of braking, a supply voltage signal bringing about a brief activation of the recirculating pump drive motor (37) is generated.

## Revendications

1. Etage de commande (58) pour la commande de propulsion du moteur d'entraînement de l'unité de pompage de refoulement d'un système antiblocage (ABS) pour un véhicule routier avec circuits statiques de freinage, le système ABS opérant par le principe de refoulement selon lequel du liquide de frein, qui a été déchargé dans un accumulateur basse pression (51, 52) pendant une phase de réduction de pression dans un frein de roue soumis à la régulation, par l'intermédiaire d'une soupape de régulation de pression de freinage (24, 26, 27), commandée dans sa position de réduction de pression par un signal de réduction de pression fourni par l'unité électronique de commande de freinage antiblocage ABS, et par l'intermédiaire d'un conduit de retour (41, 44), est refoulé en retour dans le conduit principal de freinage (19, 22) du circuit de freinage correspondant au moyen de la (des) pompe(s) de refoulement (31, 32) et ainsi une quantité de liquide de frein correspondant à celle qui a été déchargée est renvoyée dans l'appareil de freinage, le système d'entraînement des pompes étant actionné au moins pendant la durée de la phase de réduction de pression et le moteur d'entraînement (37) étant agencé comme un moteur électrique dont la vitesse de rotation est proportionnelle à la tension d'excitation, caractérisé en ce que l'étage de commande (58) produit, à partir de l'application d'un signal de réduction de pression, une tension d'excitation pour le moteur d'entraînement (37) qui augmente à mesure que la durée dudit signal croît et qui peut atteindre, après une période prédéterminée de montée, une valeur maximale en corrélation avec la vitesse maximale de rotation du moteur (37), en étant maintenue ensuite à cette valeur au moins jusqu'à la disparition du signal de réduction de pression, tandis qu'autrement elle augmente jusqu'à la valeur qui sera atteinte pendant la durée du signal de réduction de pression, et en ce que l'étage de commande (58) commande par contre une réduction de la tension d'excitation du moteur (37), s'établissant - de façon continue ou échelonnée - lors de la décroissance du signal de réduction de pression, jusqu'à l'arrêt du moteur de telle sorte que l'intégrale temporelle de la tension d'excitation pendant la réduction de la tension d'excitation corresponde au moins à l'intégrale temporelle pendant le temps de montée de la tension d'excitation.

2. Etage de commande selon la revendication 1, caractérisé en ce que, pour la production de la tension d'excitation, appliquée au moteur d'entraînement (37) des pompes de refoulement (31 et 32), il est prévu au moins un convertisseur numérique/analogique (74), qui convertit le compte de sortie d'un compteur progressif/régressif (72) en une tension proportionnelle à celui-ci, en ce que ce compteur progressif/régressif (72) reçoit, à son entrée de comptage progressif(71), pendant la durée du signal de réduction de pression, des impulsions de comptage progressif produites à une cadence fixe, et son entrée de comptage régressif (99) reçoit, après la disparition du signal de réduction de pression, des impulsions de comptage régressif produites en continu mais qui sont supprimées pendant la durée du signal de réduction de pression, la fréquence de succession des impulsions de comptage régressif étant au maximum égale à celle des impulsions de comptage progressif.

3. Etage de commande selon la revendication 2, caractérisé en ce que, pour la production des impulsions de comptage progressif, il est prévu au moins une porte-ET (67, 68, 69), qui est sollicitée à une de deux entrées par le signal de réduction de pression et à l'autre entrée par des impulsions de sortie de haute fréquence fournies par un générateur d'impulsions d'horloge (66), et en ce que, pour la production des impulsions de comptage régressif, il est prévu au moins une porte-ET (104, 113), qui comporte au moins une entrée logiquement inversée (102) à laquelle elle reçoit le signal de sortie de la porte-ET correspondante (67, 68, 69), ainsi qu'une entrée non logiquement inversée (103), à laquelle elle est sollicitée par les impulsions de sortie du générateur d'impulsions d'horloge (66).

4. Etage de commande selon la revendication 2 ou la revendication 3 pour un système ABS, dans lequel il est prévu au moins deux freins de roues (11 et 12) pouvant être soumis à la régulation indépendamment l'un de l'autre et à partir desquels du liquide de frein peut être déchargé dans un conduit de retour (41) et un accumulateur basse pression (51) relié à celui-ci par l'intermédiaire de respectivement une soupape de régulation de pression de freinage (24 et 26), caractérisé en ce que les signaux de réduction de pression, produits en vue d'une commande séparée de réduction de pression par lesdites soupapes de régulation de pression de freinage (24 et 26), peuvent commander respectivement un compteur progressif/régressif (77 et 79), dont les comptes de sortie sont additionnés au moyen d'un additionneur numérique (83) et en ce que le signal de sortie de l'additionneur, se présentant avec un format numérique, sera converti au moyen d'un convertisseur numérique/analogique (84) dans la tension d'excitation du moteur d'entraînement de pompes (37).

5. Etage de commande selon la revendication 4, caractérisé en ce que, à partir d'un compte d'un compteur progressif/régressif (72) ou de l'additionneur (83), qui est combiné avec une tension maximale d'excitation du moteur d'entraînement de pompes (37), ce compteur ou cet additionneur produiront un signal se présentant comme un signal de tension continue de manière à produire, à partir de sa combinaison logique-ET avec les impulsions de sortie du générateur d'impulsions d'horloge (66), des impulsions de retour à l'état initial pour le ou les compteurs (72 ou 77 et 79), la fréquence des impulsions de retour à l'état initial, qui sont appliquées simultanément aux deux compteurs progressif/régressif (77 et 79), qui sont associés aux deux soupapes de régulation de pression de freinage (24 et 26) des freins de roues (11 et 12) associés dans un circuit de freinage (I), étant divisée par deux au moyen d'un étage de division par deux (95) par rapport à la fréquence des impulsions de comptage progressif qui sont appliquées à ces deux compteurs progressif/régressif (77 et 79).

6. Etage de commande selon la revendication 5, caractérisé en ce que les deux compteurs progressif/régressif (77 et 79), dont les comptes représentent une mesure de la durée des phases de réduction de pression se déroulant dans les freins de roues (11 et 12) réglables séparément, seront soumis l'un après l'autre à un comptage régressif après terminaison desdites phases.

7. Etage de commande selon une des revendications 1 à 6, caractérisé en ce que l'augmentation de la tension d'excitation et la réduction de la tension d'excitation se produisent linéairement dans le temps et en ce que la durée de réduction de la tension est plus grande que la durée d'augmentation de la tension d'excitation du moteur d'entraînement (37).

8. Etage de commande selon une des revendications 2 à 7, caractérisé en ce que la fréquence des impulsions de comptage régressif qui sont appliquées à l'entrée de comptage régressif (99, 109, 111) du compteur progressif/régressif (72, 77, 79) est plus petite que celle des impulsions de comptage progressif.

9. Etage de commande selon la revendication 8, caractérisé en ce qu'un étage de division (118) est prévu avant l'entrée de comptage régressif du compteur progressif/régressif (72, 77, 79).

10. Etage de commande selon une des revendications 2 à 9, caractérisé en ce que le signal se présentant sous la forme d'un signal de tension continue au moins pendant la durée des phases de réduction de pression et appliqué à une entrée de la porte-ET (67, 68, 69) produisant respectivement à sa sortie des impulsions de comptage progressif sera produit comme un signal engendré en correspondance au signal de réduction de pression mais cependant avec une décroissance retardée par rapport à celui-ci.

11. Etage de commande selon une des revendications 1 à 10, caractérisé en ce que, au début d'un freinage, il se produira un signal de tension d'alimentation engendrant un actionnement de courte durée du moteur (37) d'entraînement des pompes de refoulement.
